# EUROPEAN PATENT APPLICATION

(11) **EP 2 784 889 A1**
(43) Date of publication of application: **01.10.2014**
(21) Application number: 14162233.2
(22) Date of filing: 28.03.2014
(51) Int. Cl.: H02G 3/20

(54) **Junction box for mounting in lath structure**

(30) Priority: 29.03.2013 NL 2010547
(71) Applicant: Attema B.V., 4203 NJ Gorinchem (NL)
(72) Inventor: Goth, Robin, 6862 GT OOSTERBEEK (NL)
(74) Representative: EP&C

(57) **Abstract**

A junction box (1), in particular for ceiling mounting, comprises a bottom wall (2) and a cylindrical side wall (4) defining a central box axis (5), and a plurality of tubular sprouts (6a, 6b, 6c, 6d, 6e, 6f, 8a, 8b, 8c, 8d, 8e, 8f). First sprouts (6a, 6b, 6c, 6d, 6e, 6f) each have a central axis (10) extending in a plane at right angles to the central box axis (5). A set of first sprouts (6a, 6b, 6c, 6d, 6e, 6f) comprises two pairs of supporting first sprouts (6a, 6d; 6c, 6f) having an outer circumferential surface defining straight contact lines parallel to the central axes of the supporting first sprouts (6a, 6d; 6c, 6f), which straight contact lines run tangentially to the side wall (4).

## Description

### FIELD OF THE INVENTION

The invention relates to the field of junction boxes, and more specifically to junction boxes configured to be mounted in a wall of a room, in particular in a ceiling of a room, where a lath structure is present to support a ceiling structure.

### BACKGROUND OF THE INVENTION

Reference NL88233C discloses a junction box comprising a rectangular or square bottom wall and four side walls having a rectangular or square cross-section. At each of the four side walls a pair of cylindrical tube portions or sprouts is provided, wherein central axes of first sprouts of opposite side walls are situated at a first distance above the bottom wall, and central axes of second sprouts of the adjacent opposite side walls are situated at a second distance above the bottom wall, wherein the first distance is smaller than the second distance. Free edges of the four side walls define a box opening. The junction box can be built into a wall, but specifically is intended to be mounted in a ceiling with the bottom wall of the junction box facing upwards, where the box opening is to be located about flush with the lower side of the ceiling. The box can be closed by a cover which is removably attached to the box by screws. During installation of the junction box, tubes which may either be rigid or flexible, are connected to the sprouts to provide ducts leading to and from the junction box for accommodating electrical and/or optical conductors.

When mounting the junction box disclosed in reference NL88233C in a ceiling of a room of a building, a ceiling structure of laths is used. Such a lath structure usually comprises a plurality of parallel and spaced first laths extending in a first direction, usually parallel to a wall of the room, where all first laths are at a first, high height level. The lath structure further comprises a plurality of parallel and spaced second laths extending in a second direction, usually at right angles to the first direction, where the second laths are at a second, low height level, contact the first laths, and usually are connected to the first laths. Accordingly, the lath structure comprises a plurality of meshes or openings delimited by parts of first laths at the first height level, and parts of second laths at the second height level.

The junction box disclosed in reference NL88233C is mounted in one of such a lath structure openings at an appropriate location. In a position of the junction box upside down (i.e. with the bottom wall of the junction box facing upwards), bottom sides of opposite first sprouts may rest on top sides of two consecutive second laths, whereas the second sprouts are situated between the two consecutive second laths. Top sides of opposite second sprouts may be below bottom sides of the first laths, whereas the first sprouts are situated between two consecutive first laths. Gypsum boards are mounted to the second laths at the bottom side thereof. A square hole is provided in one of the gypsum boards at a correct location to allow parts of the side walls of the junction box between the second sprouts and the box opening, and similar parts of the side walls between the first sprouts and the box opening, to reach at least partly through the square hole in the gypsum board.

Mounting the junction box disclosed in reference NL88233C in a ceiling is a complicated task. For an optimum operation of fixing the junction box at a particular location of the ceiling, one requires two second laths spaced apart at a distance corresponding to a width of one of the side walls of the junction box. Then, the junction box may rest on these second laths by the first sprouts. In this situation, the junction box is still slidable in two opposite longitudinal directions of the second laths, and the junction box can be lifted. To avoid the junction box sliding in one second lath longitudinal direction, a first one of a first lath is used, while another one of a first lath spaced from the first one of the first lath at a distance corresponding to a width of one of the side walls of the junction box avoids the junction box sliding in the opposite second lath longitudinal direction. At the same time, the pair of first laths spaced apart at a distance corresponding to a width of one of the side walls of the junction box, and the pair of second laths spaced apart at a distance corresponding to a width of one of the side walls of the junction box fix the junction box in all directions, i.e. in directions in a horizontal plane and in directions in a vertical plane. However, a second one of the pair of first laths can only be placed after the junction box has been placed on the pair of second laths and against the first one of the pair of first laths. Thus, the ceiling structure of first and second laths can only be completed after the junction box has been brought into position, which is disadvantageous in that building work (constructing the lath structure) and installation work (mounting the junction box and installing tube connections and electrical wires) are mixed.

A further disadvantage of the junction box disclosed in reference NL88233C is that mounting the junction box in a lath structure opening having, in its first and second directions, greater dimensions than the width of a side wall of the junction box, virtually is impossible since the junction box would fall through the opening. If one would try to fix the junction box in such an opening, then (possibly temporary) makeshift measures would be applied, such as using a screw applied from below through an area where two second sprouts lie against each other, the screw reaching into a first lath.

Furthermore, providing a neat hole in a gypsum board for the parts of the side walls of the junction box adjacent the box opening requires thorough measuring of several distances, and a marking for the hole to be made on the gypsum board. Already in this process, a measuring error will lead to misplacing the hole marking, rendering the gypsum board worthless after providing the hole at the erroneous marking. Also, the actual provision of the hole by drilling, cutting and/or sawing using hand tools to make it rectangular, is a tedious task which takes relatively long time. The edges of the hole often are not straight, and/or do not fit closely to the side walls of the junction box.

Reference DE4222282A1 discloses an embodiment of a junction box having two sprouts extending tangentially from a side wall of the junction box.

### SUMMARY OF THE INVENTION

It would be desirable to provide a junction box which can be mounted in a ceiling lath structure and allows for an easy provision of a hole in a gypsum board for the junction box. It would also be desirable to provide a junction box which can be mounted in a completed ceiling lath structure without requiring any further work on the lath structure. It would also be desirable to provide a junction box which can be fixed in an opening of a ceiling lath structure, while not requiring the junction box to be supported by a pair of first laths and a pair of second laths each having laths at a predetermined distance from each other.

To better address one or more of these concerns, the invention provides a junction box, in particular for ceiling mounting. The junction box comprises a bottom wall and a cylindrical side wall defining a central box axis, and a plurality of tubular sprouts each extending from a sprout opening in the side wall. The plurality of sprouts comprises a set of first sprouts, wherein each first sprout has a central axis extending in a first plane at right angles to the central box axis. The set of first sprouts comprises a first pair of supporting first sprouts, wherein one supporting first sprout of the first pair extends from the side wall in one direction, and wherein the other supporting first sprout of the first pair extends from the side wall in an opposite direction. The first pair of supporting first sprouts have an outer circumferential surface defining a first straight contact line configured to let the junction box engage an external support surface. The first straight contact line extends parallel to the central axes of the first pair of supporting first sprouts. The first straight contact line runs tangentially to the side wall.

The set of first sprouts comprises a second pair of supporting first sprouts, wherein one supporting first sprout of the second pair extends from the side wall in one direction, and wherein the other supporting first sprout of the second pair extends from the side wall in an opposite direction. The second pair of supporting first sprouts has an outer circumferential surface defining a second straight contact line configured to let the junction box engage an external support surface. The second straight contact line extends parallel to the central axes of the second pair of supporting first sprouts. The second straight contact line runs tangentially to the side wall and is parallel to the first straight contact line.

Providing the supporting first sprouts in the junction box such that their circumferential surface defines first and second straight contact lines running tangentially to the side wall and parallel to the central axes of the supporting first sprouts, allows the junction box, despite its cylindrically shaped side wall, to have a support contact line configured to abut a lath of a lath structure to have a stable and defined position. At the same time, the cylindrical shape of the junction box in its defined position allows for an easy and accurate provision of a hole in a gypsum board for the junction box, e.g. using a hole saw. Here, it is contemplated for a cover of the junction box to be provided with a centrally placed pin, which can mark a position for a hole saw on a gypsum board by just pushing the yet unmounted gypsum board against a pointed end of the pin (where the bottom wall of the junction box would be facing upwards, and the cover of the junction box would be facing downwards). The marked position and the known outer diameter of the junction box may be used for easy provision of the hole in the gypsum board by a hole saw.

In an embodiment, the plurality of sprouts of the junction box further comprises a set of second sprouts extending from the side wall. Each second sprout has a central axis extending in a second plane at right angles to the central box axis. The first plane is spaced from the second plane by a predetermined distance. Like the set of first sprouts, the set of second sprouts may comprise a first pair of supporting second sprouts, wherein one supporting second sprout of the first pair extends from the side wall in one direction, and wherein the other supporting second sprout of the first pair extends from the side wall in an opposite direction. The first pair of supporting second sprouts has an outer circumferential surface defining a third straight contact line configured to let the junction box engage an external support surface. The third straight contact line extends parallel to the central axes of the first pair of supporting second sprouts, wherein the third straight contact line runs tangentially to the side wall.

In an embodiment, the set of second sprouts comprises a second pair of supporting second sprouts, wherein one supporting second sprout of the second pair extends from the side wall in one direction, and wherein the other supporting second sprout of the second pair extends from the side wall in an opposite direction. The second pair of supporting second sprouts has an outer circumferential surface defining a fourth straight contact line configured to let the junction box engage an external support surface. The fourth straight contact line extends parallel to the central axes of the second pair of supporting second sprouts. The fourth straight contact line runs tangentially to the side wall and is parallel to the third straight contact line.

Accordingly, a person installing the junction box may select to use the supporting first sprouts and/or the supporting second sprouts for mounting the junction box in a predefined position abutting a lath of a lath structure.

In an embodiment, a first distance of the first plane to the bottom wall is smaller than a second distance of the second plane to the bottom wall, i.e. the first set of sprouts is located closer to the bottom wall of the junction box than the second set of sprouts.

In an embodiment, the set of first sprouts comprises a first plurality of first sprouts extending in parallel in a first direction, and a second plurality of first sprouts extending in parallel opposite to said first direction. Similarly, in an embodiment the set of second sprouts comprises a first plurality of second sprouts extending in parallel in a second direction, and a second plurality of second sprouts extending in parallel opposite to said second direction. Such first and/or second sprouts arrangements provide a compact connection structure, wherein tubes or cables to be connected to the sprouts of the first or second plurality of first or second sprouts may be bundled together.

In an embodiment, the first direction of the first sprouts is at right angles to the second direction of the second sprouts. When the first set of sprouts comprises supporting first sprouts, and the second set of sprouts comprises supporting second sprouts, the junction box may be supported by such supporting first and second sprouts against different laths oriented at right angles to each other.

In an embodiment, the first plurality and the second plurality of the first and/or second sprouts are at least two, in particular three, to allow for sufficient possibilities for ducts and/or cables to be connected to the junction box.

In an embodiment, the junction box further comprises a support structure connected to the side wall. The support structure may be located between two adjacent sprouts. The support structure defines a fastening region for a fastener, such as a screw or a nail, where the fastener can be fastened in the fastening region by friction and/or by deformation of the fastening region, and/or by cutting into the fastening region.

In an embodiment, the junction box comprises at least one lip extending from the side wall. The lip has an opening. The support structure is located spaced from the lip opening in a direction parallel to the central box axis. The spacing preferably is configured to be at least, and/or about, the same as the height of a lath of a lath structure. In such case, the lip may be positioned at the top side of the lath, whereas the support structure is at the bottom side of the lath, and an elongate fastener, such as a screw or nail, may be inserted into the opening of the lip, through the lath, and into the support structure, to fix the junction box relative to the lath. Of course, it is also possible to provide the lip and the support structure such that the lip is positioned at the bottom side of the lath, and the support structure is at the top side of the lath, using the same kind of elongate fastener to fix the junction box relative to the lath. The lip opening provides a reference or visual indicator as to where to insert the fastener to have the fastener reach the intended location of the support structure, which cannot be seen from the side of the lath where the fastener is inserted. The opening of the lip may be a full hole through the lip having lip material surrounding the opening, or may be a partial hole having lip material not fully surrounding the opening.

In an embodiment, the at least one lip extends from the side wall near the bottom wall, and the support structure is located between two adjacent second sprouts, wherein the support structure defines a fastening region for a fastener. In another embodiment, the junction box comprises a box opening at an edge of the side wall facing away from the bottom wall, wherein at least one lip extends from the side wall near the box opening, and the support structure is located between two adjacent first sprouts, the support structure defining a fastening region for a fastener. A fastener can thus extend from the lip opening through a lath into the fastener region between two adjacent sprouts, which fastener region is configured to fixedly accommodate a part of the fastener.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a perspective view of an embodiment of an installation box according to the present invention, showing its top side, without a cover;
Figure 1b depicts a perspective detail view of the installation box of Figure 1, with a cover.
Figure 2 depicts a top view of the installation box of Figure 1.
Figure 3 depicts a perspective view of the installation box of Figure 1, showing its bottom side.
Figure 4 depicts a bottom view of the installation box of Figure 1.
Figure 5 depicts a side view of the installation box of Figure 1, as seen in the direction of arrow V as shown in Figure 3.
Figure 6 depicts a perspective view of a ceiling lath structure construction with two installation boxes according to Figure 1 mounted therein upside down (bottom wall up), on a reduced scale compared to Figure 1.
Figure 7 depicts a bottom view of one of the installation boxes of Figure 6 in the ceiling lath structure.
Figure 8 depicts a top view of one of the installation boxes of Figure 6 in a lath structure, on a larger scale than Figure 7.

### DETAILED DESCRIPTION OF EMBODIMENTS

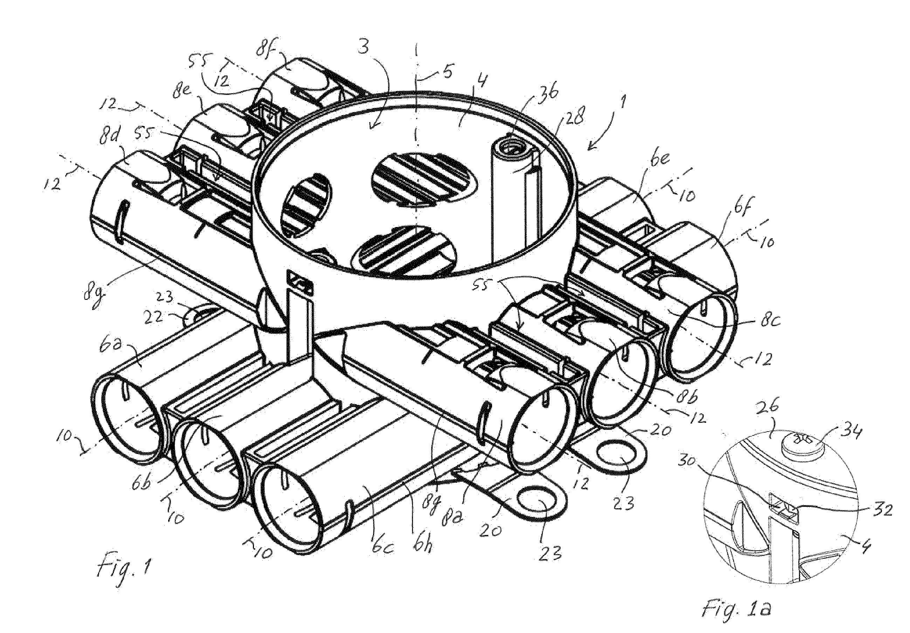

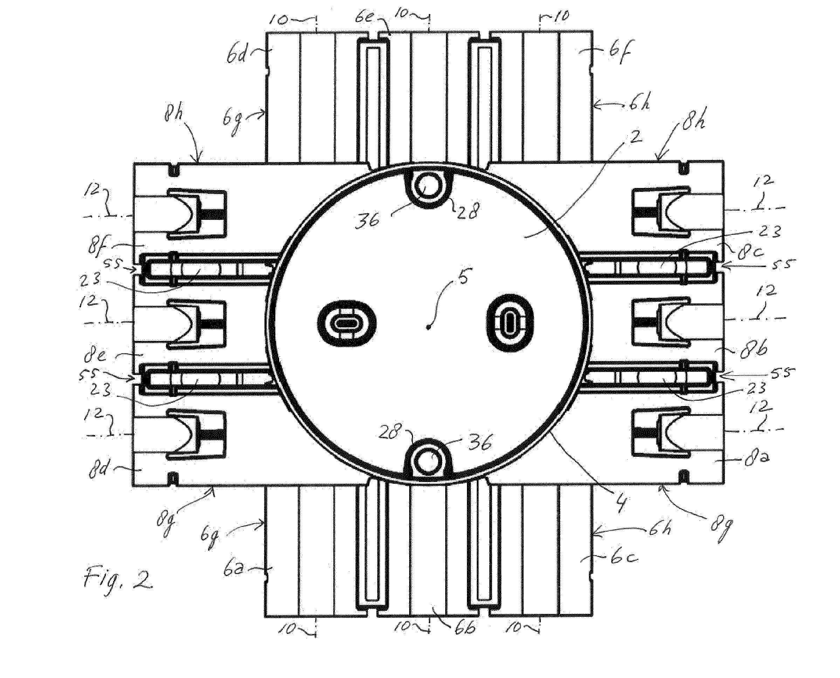

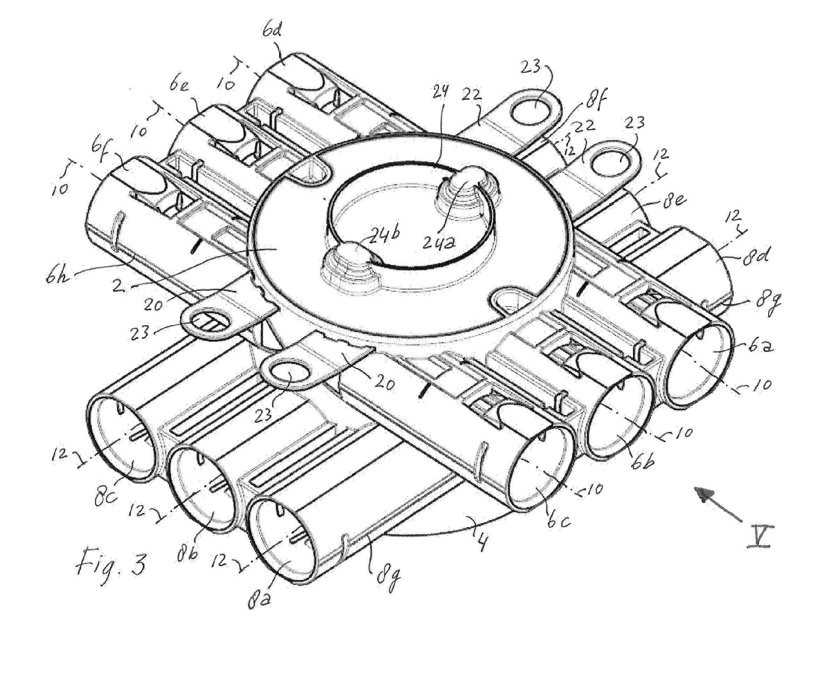

Figures 1, 1a, and 2-5 depict an embodiment of a junction box 1, comprising a bottom wall 2 and a cylindrically shaped side wall 4. The junction box comprises a set of first sprouts 6a, 6b, 6c, 6d, 6e, 6f, and a set of second sprouts 8a, 8b, 8c, 8d, 8e, 8f. The sprouts 6a, 6b, 6c, 6d, 6e, 6f, 8a, 8b, 8c, 8d, 8e, 8f each substantially consist of tube portions having an outer diameter. Each sprout 6a, 6b, 6c, 6d, 6e, 6f, 8a, 8b, 8c, 8d, 8e, 8f connects to the side wall 4 of the junction box 1, where the side wall 4 comprises a side wall opening of shape and dimensions substantially defined by an inner diameter of the corresponding sprout 6a, 6b, 6c, 6d, 6e, 6f, 8a, 8b, 8c, 8d, 8e, 8f, and its orientation relative to the side wall 4.

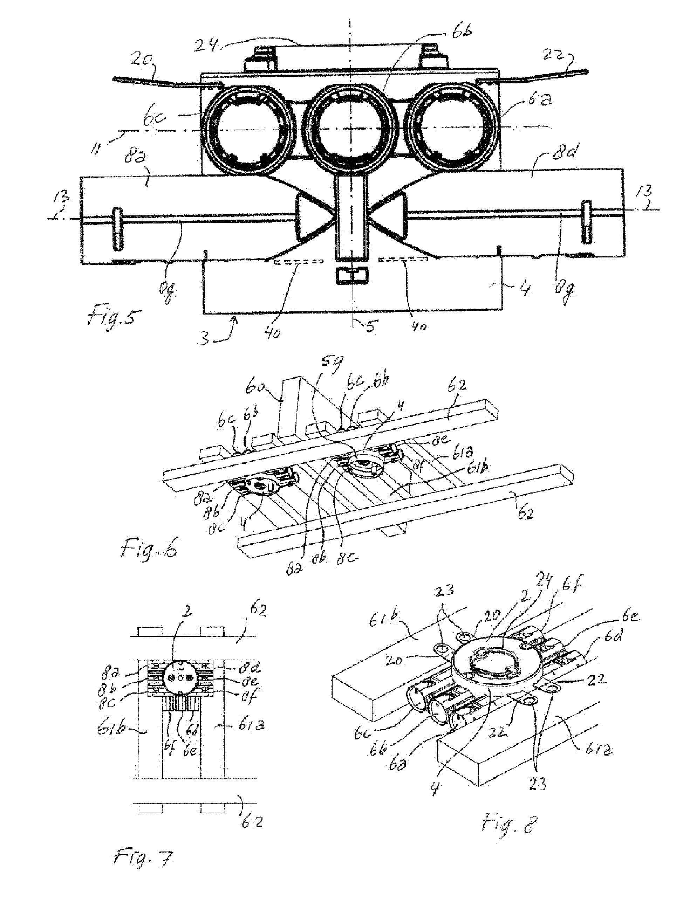

The first sprouts 6a, 6b, 6c, 6d, 6e, 6f each have a central axis 10, wherein the central axes 10 of the first sprouts 6a, 6b, 6c, 6d, 6e, 6f are parallel, and extend in one plane 11 (Figure 5) substantially parallel to a plane of the bottom wall 2 of the junction box 1 (or, in other words, substantially at right angles to a central box axis 5). Thus, a first distance between each central axis 10 of the first sprouts 6a, 6b, 6c, 6d, 6e, 6f and the (plane of the) bottom wall 2 is the same. First sprout 6a has the same central axis 10 as first sprout 6d, first sprout 6b has the same central axis 10 as first sprout 6e, and first sprout 6c has the same central axis 10 as first sprout 6f. In other words, first sprouts 6a, 6b and 6c extend in parallel from the side wall 4 in one direction, and first sprouts 6d, 6e and 6f extend in parallel from the side wall 4 in the opposite direction.

The second sprouts 8a, 8b, 8c, 8d, 8e, 8f each have a central axis 12, wherein the central axes 12 of the second sprouts 8a, 8b, 8c, 8d, 8e, 8f are parallel, and extend in one plane 13 (Figure 5) substantially parallel to a plane of the bottom wall 2 of the junction box 1 (or, in other words, substantially at right angles to a central box axis 5). Thus, a second distance between each central axis 12 of the second sprouts 8a, 8b, 8c, 8d, 8e, 8f and the (plane of the) bottom wall 2 is the same. Second sprout 8a has the same central axis 10 as second sprout 8d, second sprout 8b has the same central axis 10 as second sprout 8e, and second sprout 8c has the same central axis 10 as second sprout 8f. In other words, second sprouts 8a, 8b and 8c extend in parallel from the side wall 4 in one direction, and second sprouts 8d, 8e and 8f extend in parallel from the side wall 4 in the opposite direction.

The first distance differs from the second distance. In particular, the first distance is smaller than the second distance. Central axes 10 run at right angles to central axes 12.

First sprouts 6a and 6d extend from the side wall 4 at such a location that a first straight contact line 6g running on the outer surfaces of the first sprouts 6a and 6d runs substantially tangentially to the side wall 4. The junction box 1 can be supported at its side wall 4 by the first sprouts 6a and 6d, which also can be referred to as a first pair of supporting first sprouts 6a, 6d, whereby the first straight contact line 6g can engage an external support surface. Similarly, first sprouts 6c and 6f extend from the side wall 4 at such a location that a second straight contact line 6h running on the outer surfaces of the first sprouts 6c and 6f runs substantially tangentially to the side wall 4. The junction box 1 can be supported at its side wall 4 by the first sprouts 6c and 6f, which also can be referred to as a second pair of supporting first sprouts 6c, 6f, whereby the second straight contact line 6h can engage an external support surface. Further, second sprouts 8a and 8d extend from the side wall 4 at such a location that a third straight contact line 8g running on the outer surfaces of the second sprouts 8a and 8d runs substantially tangentially to the side wall 4. The junction box 1 can be supported at its side wall 4 by the second sprouts 8a and 8d, which also can be referred to as a first pair of supporting second sprouts 8a, 8d, whereby the third straight contact line 8g can engage an external support surface. Also, second sprouts 8c and 8f extend from the side wall 4 at such a location that a fourth straight contact line 8h running on the outer surfaces of the second sprouts 8c and 8f runs substantially tangentially to the side wall 4. The junction box 1 can be supported at its side wall 4 by the second sprouts 8c and 8f, which also can be referred to as a second pair of supporting second sprouts 8c, 8f, whereby the fourth straight contact line 8h can engage an external support surface.

During installation of the junction box 1, tubes which may either be rigid or flexible, may be connected to the sprouts 6a, 6b, 6c, 6d, 6e, 6f, 8a, 8b, 8c, 8d, 8e, 8f to provide ducts leading to and from the junction box 1 for accommodating electrical and/or optical conductors.

The sprouts 6a, 6b, 6c, 6d, 6e, 6f, 8a, 8b, 8c, 8d, 8e, 8f may also be provided with sockets configured to take up plugs of cables leading to and from the junction box 1.

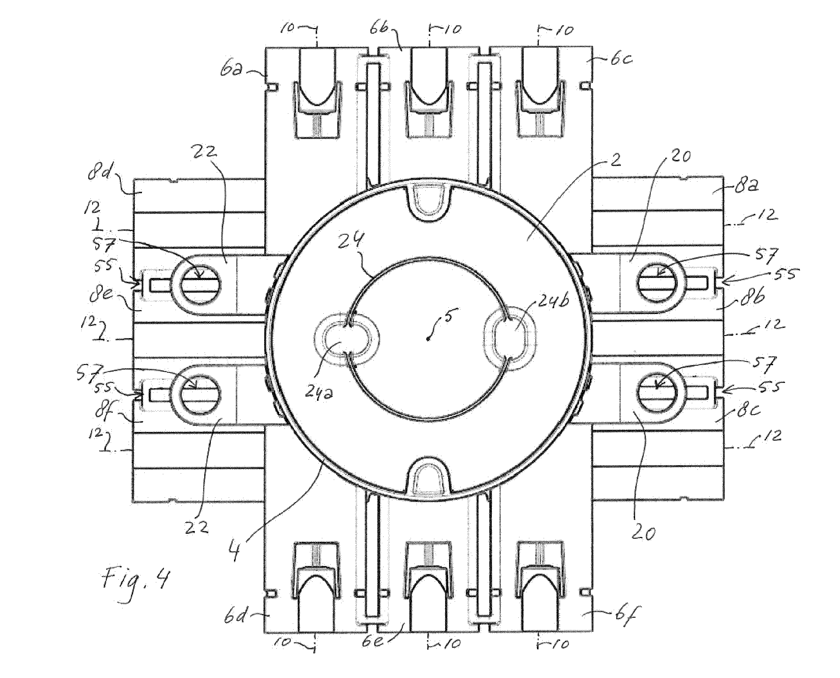

The junction box 1 comprises a pair of lips 20 and a pair of lips 22 connected to the side wall 4 near the bottom wall 2. Each lip comprises an opening 23. The openings 23 are located such that a line centrally through the opening 23 passes through a support structure 55 between two adjacent second sprouts. Thus, lines running centrally through openings 23 of lips 20 pass through support structures 55 located between two adjacent second sprouts, i.e. between second sprouts 8a and 8b, and between second sprouts 8b and 8c. Similarly, lines running centrally through openings 23 of lips 22 pass through support structures 55 located between two adjacent second sprouts, i.e. between second sprouts 8d and 8e, and between second sprouts 8e and 8f. The support structures 55 each define a fastening region 57 (Figure 4) for a fastener, such as a screw or a nail, where the fastener can be fastened in the fastening region 57 by friction and/or deformation of the fastening region, and/or by cutting into the fastening region 57. The lips 20 and 22 are connected to the side wall 4 through a plurality of (in the embodiment shown: three) narrow bridges which provide for a connection that is strong enough in normal use, but can be broken by hand by rotating the lip to and fro, to remove a lip 20, 22 from the side wall 4.

The bottom wall 2 is provided with a ring 24 having a height such that the junction box 1 may also be mounted with the aid of fasteners through holes provided at locations 24a, 24b on a known metal stud structure which may be an embodiment of a lath structure.

Figure 1 a illustrates the mounting of a cover 26 on the junction box 1. Oppositely arranged ribs 28 provided at the inner face of the side wall 4 have recesses 30 extending through the side wall 4 each for accommodating a nut 32. A screw 34 applied through a hole in the cover 26 and through a hole 36 in a rib 28 may be connected to the nut 32 to fasten the cover 26 on the junction box 1.

Figures 6, 7 and 8 illustrate a mounting of the junction box 1 in a ceiling lath structure.

Figure 6 illustrates a ceiling lath structure comprising a plurality of parallel spaced beams 60 (where only one beam 60 is shown in Figure 6). The beams 60 extend in a first direction, usually parallel to a side wall of a room in a building, such as a house. The ceiling lath structure further comprises a plurality of parallel spaced second laths 62 extending in a second direction, which usually is at an angle, in particular at right angles, to the first direction. The second laths 62 have a second lath width and a second lath height, where the second lath width and the second lath height determine the cross-sectional area of the second lath 62.

Mounting of a junction box 1 in such a ceiling lath structure may involve a pre-assembly of the junction box 1 and two parallel spaced first laths 61 a, 61 b separate from the ceiling lath structure, as indicated in Figure 8. The first laths 61 a, 61 b have a first lath width and a first lath height, where the first lath width and the first lath height determine the cross-sectional area of the first lath 61 a, 61 b.The first laths 61 a, 61 b are configured to have a length which is at least about the sum of the distance between two consecutive second laths 62 and twice the second lath width, so that the first laths 61a, 61b may be fully supported by the second laths 62 at their areas of contact.

The junction box 1 and the first lath 61a may be connected to each other by inserting the first lath 61 a in the space determined by the second sprouts 8d, 8e and 8f (where these second sprouts 8d, 8e and 8f are to contact a bottom surface of the first lath 61a), the first sprouts 6a and 6d (where these first sprouts 6a, 6d, which can also be referred to as supporting first sprouts 6a, 6d, are to contact a side surface (an external support surface) of the first lath 61 a at the straight contact line 6g), and the lips 22 (where these lips 22 are to contact a top surface of the first lath 61 a). The openings 23 of the lips 22 mark the locations of insertion of screws or similar fasteners into and through the first lath 61 a. The screws or similar fasteners preferably have a length such that their ends reach into the fastening regions 57 of the support structures 55 between the second sprouts 8d, 8e, and between the second sprouts 8e, 8f, respectively, to engage the support structures 55. These support structures 55 are located exactly under the openings 23 of the lips 22, so that a technician installing the junction box 1 need not measure or otherwise determine the exact location of insertion of the screws or similar fasteners at the top side of the first lath 61 a. A "blind" mounting of the junction box 1 to the first lath 61 a thus is possible, wherein the openings 23 are visual indicators for a fastener position. Accordingly, the junction box 1 can be easily fastened to the first lath 61 a in a fixed position and orientation. Already by this fastening, the junction box 1 can be sufficiently fixedly positioned in a ceiling lath structure by mounting the first lath 61 a with the junction box 1 connected to it on the second laths 62.

In a similar way, the junction box 1 can be connected to the first lath 61 b by inserting the first lath 61 b in the space determined by the second sprouts 8a, 8b, 8c (where these second sprouts 8a, 8b and 8c are to contact a bottom surface of the first lath 61 b), the first sprouts 6c and 6f (where these first sprouts 6c and 6f, which can also be referred to as supporting first sprouts 6c, 6f, are to contact a side surface (an external support surface) of the first lath 61 b at the straight contact line 6h), and the lips 20 (where these lips 20 are to contact a top surface of the first lath 61b). The openings 23 of the lips 20 mark the location of insertion of screws or similar fasteners into and through the first lath 61 b. The screws or similar fasteners preferably have a length such that their ends reach into the fastening regions 57 of the support structures 55 between the second sprouts 8a, 8b, and the second sprouts 8b, 8c, respectively, to engage the support structures 55. These support structures 55 are located exactly under the openings 23 of the lips 20, so that a technician installing the junction box 1 need not measure or otherwise determine the exact location of insertion of the screws or similar fasteners at the top side of the first lath 61 b. A "blind" mounting of the junction box 1 to the first lath 61 b thus is possible, wherein the openings 23 are visual indicators for a fastener position. Accordingly, the junction box 1 can be fastened to the first lath 61 b in a fixed position and orientation. Already by this fastening, the junction box 1 can be sufficiently fixedly positioned in a ceiling lath structure by mounting the first lath 61 b with the junction box 1 connected to it on the second laths 62. Additionally, the junction box 1 and both the first lath 61 a and the first lath 61 b connected to it can be mounted on the second laths 62, preferably such that the first sprouts 6a, 6b, 6c contact a top side of a second lath 62, and the same second lath 62 contacts the side wall 4 at the straight contact line 8g of the supporting second sprouts 8a, 8d, as shown in Figures 6 and 7.

While in the embodiment of the junction box 1 shown in Figures 1-8 the lips 20, 22 are provided on the side wall 4 near the bottom wall 2 to interact with the support structures 55 of located between the second sprouts 8a, 8b, 8c, 8d, 8e and 8f, similar lips 40 can alternatively or additionally be provided on the side wall 4 near a junction box opening 3 where the cover 26 is to be provided, as indicated with dashed lines in Figure 5, to interact with support structures, similar to the support structures 55, between first sprouts 6a and 6b, 6b and 6c, 6d and 6e, and 6e and 6f. A second lath 62 can be inserted into a space determined by the first sprouts 6a, 6b, 6c, or 6d, 6e, 6f, respectively (where the first sprouts 6a, 6b, 6c are to contact a top surface of one second lath 62, and the first sprouts 6d, 6e, 6f are to contact a top surface of another second lath 62), the second sprouts 8a, 8d, or 8c, 8f, respectively (where the second sprouts 8a and 8d are to contact a side surface (an external support surface) of one second lath 62 at the straight contact line 8g, and the second sprouts 8c, 8f are to contact a side surface of another second lath 62 at a straight contact line 8h), and the lips 40 (where these lips 40 are to contact bottom surfaces of the second laths 62).

Each of the sprouts 6a, 6b, 6c, 6d, 6e, 6f, 8a, 8b, 8c, 8d, 8e, 8f is configured to receive an end of a rigid or flexible tube which is to form a duct for electrical and/or optical conductors guided to the junction box 1. Each of the sprouts 6a, 6b, 6c, 6d, 6e, 6f, 8a, 8b, 8c, 8d, 8e, 8f is also configured to accommodate an electrical or optical connector.

An outer diameter of the sprouts 6a, 6b, 6c, 6d, 6e, 6f, 8a, 8b, 8c, 8d, 8e, 8f is preferably selected to be 22 mm, corresponding to a usual thickness (height) of a lath 61 a, 61 b, 62 of a lath structure.

It is noted that the embodiment of the junction box 1 described above comprises three first sprouts 6a, 6b, 6c and three opposite first sprouts 6d, 6e, 6f, as well as three second sprouts 8a, 8b, 8c and three opposite second sprouts 8d, 8e, 8f. In other embodiments, at least one of first sprouts 6b and 6e may be omitted. In still other embodiments, at least one of second sprouts 8b and 8e may be omitted.

Referring to Figure 6, an extension ring 59 is shown to increase the height of the junction box 1 in case a ceiling material would have a thickness such that the normal edge of the junction box 1 delimiting the box opening 3 would not reach to the bottom side of the ceiling material when applied to the second laths 62.

As explained above, a junction box, in particular for ceiling mounting, comprises a bottom wall and a cylindrical side wall defining a central box axis, and a plurality of tubular sprouts. First sprouts each have a central axis extending in a plane at right angles to the central box axis. A set of first sprouts comprises two pairs of supporting first sprouts having an outer circumferential surface defining straight contact lines parallel to the central axes of the supporting first sprouts, which straight contact lines run tangentially to the side wall.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

The term coupled, as used herein, is defined as connected, although not necessarily directly, and not necessarily mechanically.

## Claims

1. Junction box (1), in particular for ceiling mounting, the junction box comprising a bottom wall (2) and a cylindrical side wall (4) defining a central box axis (5), and a plurality of tubular sprouts (6a, 6b, 6c, 6d, 6e, 6f, 8a, 8b, 8c, 8d, 8e, 8f) each extending from a sprout opening in the side wall (4), the plurality of sprouts comprising a set of first sprouts (6a, 6b, 6c, 6d, 6e, 6f), wherein each first sprout has a central axis (10) extending in a first plane (11) at right angles to the central box axis (5), wherein the set of first sprouts (6a, 6b, 6c, 6d, 6e, 6f) comprises a first pair of supporting first sprouts (6a, 6d), wherein one supporting first sprout (6a) of the first pair extends from the side wall (4) in one direction, and wherein the other supporting first sprout (6d) of the first pair extends from the side wall (4) in an opposite direction, the first pair of supporting first sprouts (6a, 6d) having an outer circumferential surface defining a first straight contact line (6g) configured to let the junction box engage an external support surface, the first straight contact line (6g) extending parallel to the central axes (10) of the first pair of supporting first sprouts (6a, 6d), and wherein the first straight contact line (6g) runs tangentially to the side wall (4)
**characterized in that**
the set of first sprouts (6a, 6b, 6c, 6d, 6e, 6f) comprises a second pair of supporting first sprouts (6c, 6f), wherein one supporting first sprout (6c) of the second pair extends from the side wall (4) in one direction, and wherein the other supporting first sprout (6f) of the second pair extends from the side wall (4) in an opposite direction, the second pair of supporting first sprouts (6c, 6f) having an outer circumferential surface defining a second straight contact line (6h) configured to let the junction box engage an external support surface, the second straight contact line (6h) extending parallel to the central axes (10) of the second pair of supporting first sprouts (6c, 6f), and wherein the second straight contact line (6h) runs tangentially to the side wall (4) and is parallel to the first straight contact line (6g).

2. Junction box (1) according to claim 1, wherein the plurality of sprouts further comprises a set of second sprouts (8a, 8b, 8c, 8d, 8e, 8f) extending from the side wall (4), wherein each second sprout (8a, 8b, 8c, 8d, 8e, 8f) has a central axis (12) extending in a second plane (13) at right angles to the central box axis (5), wherein the first plane is spaced from the second plane by a predetermined distance.

3. Junction box (1) according to claim 2, wherein the set of second sprouts (8a, 8b, 8c, 8d, 8e, 8f) comprises a first pair of supporting second sprouts (8a, 8d), wherein one supporting second sprout (8a) of the first pair extends from the side wall (4) in one direction, and wherein the other supporting second sprout (8d) of the first pair extends from the side wall (4) in an opposite direction, the first pair of supporting second sprouts (8a, 8d) having an outer circumferential surface defining a third straight contact line (8g) configured to let the junction box engage an external support surface, the third straight contact line (8g) extending parallel to the central axes (12) of the first pair of supporting second sprouts (8a, 8d), wherein the third straight contact line (8g) runs tangentially to the side wall (4).

4. Junction box (1) according to claim 3, wherein the set of second sprouts (8a, 8b, 8c, 8d, 8e, 8f) comprises a second pair of supporting second sprouts (8c, 8f), wherein one supporting second sprout (8c) of the second pair extends from the side wall (4) in one direction, and wherein the other supporting second sprout (8f) of the second pair extends from the side wall (4) in an opposite direction, the second pair of supporting second sprouts (8c, 8f) having an outer circumferential surface defining a fourth straight contact line (8h) configured to let the junction box engage an external support surface, the fourth straight contact line (8h) extending parallel to the central axes (10) of the second pair of supporting second sprouts (8c, 8f), and wherein the fourth straight contact line (8h) runs tangentially to the side wall (4) and is parallel to the third straight contact line (8g).

5. Junction box (1) according to any of claims 2-4, wherein a first distance of the first plane (11) to the bottom wall (2) is smaller than a second distance of the second plane (13) to the bottom wall (2).

6. Junction box (1) according to any of claims 1-5, wherein the set of first sprouts (6a, 6b, 6c, 6d, 6e, 6f) comprises a first plurality of first sprouts (6a, 6b, 6c) extending in parallel in a first direction, and a second plurality of first sprouts (6d, 6e, 6f) extending in parallel opposite to said first direction.

7. Junction box (1) according to any of claims 2-6, wherein the set of second sprouts (8a, 8b, 8c, 8d, 8e, 8f) comprises a first plurality of second sprouts (8a, 8b, 8c) extending in parallel in a second direction, and a second plurality of second sprouts (8d, 8e, 8f) extending in parallel opposite to said second direction.

8. Junction box (1) according to claims 6 and 7, wherein the first direction is at right angles to the second direction.

9. Junction box (1) according to claim 6 or 7, wherein the first plurality and the second plurality are at least two, in particular three.

10. Junction box (1) according to any of the preceding claims, further comprising a support structure (55) connected to the side wall (4).

11. Junction box (1) according to claim 10, wherein the support structure (55) is located between two adjacent sprouts.

12. Junction box (1) according to claim 10 or 11, wherein the support structure defines a fastening region (57) for a fastener, such as a screw or a nail, where the fastener can be fastened in the fastening region (57) by friction and/or by deformation of the fastening region (57), and/or by cutting into the fastening region (57).

13. Junction box (1) according to claim 10, comprising at least one lip (20, 22) extending from the side wall (4), the lip (20, 22) having an opening (23), the support structure (55) being located spaced from the lip opening (23) in a direction parallel to the central box axis (5).

14. Junction box according to claim 13, wherein the at least one lip (20, 22) extends from the side wall (4) near the bottom wall (2), and the support structure (55) is located between two adjacent second sprouts (8a, 8b, 8c, 8d, 8e, 8f), the support structure (55) defining a fastening region (57) for a fastener.

15. Junction box according to claim 13, further comprising a box opening (3) at an edge of the side wall (4) facing away from the bottom wall (2), wherein the at least one lip (40) extends from the side wall (4) near the box opening (3), and the support structure (55) is located between two adjacent first sprouts (6a, 6b, 6c, 6d, 6e, 6f), the support structure (55) defining a fastening region (57) for a fastener.
